Europäisches Patentamt

**European Patent Office**

Office européen des brevets

(11) Publication number: **0 150 963**
**A2**

(12) **EUROPEAN PATENT APPLICATION**

(21) Application number: 85300347.3

(22) Date of filing: 18.01.85

(51) Int. Cl.⁴: **H 04 N 9/64**

(30) Priority: 27.01.84 GB 8402261

(43) Date of publication of application: 07.08.85 Bulletin 85/32

(84) Designated Contracting States: **AT BE CH DE FR IT LI NL SE**

(71) Applicant: **McMICHAEL LIMITED, Sefton Park Bells Hill, Stoke Poges Slough Berkshire, SL2 4HB (GB)**

(72) Inventor: **Robinson, Roger Neil, 11 Hatters Lane, High Wycombe Buckinghamshire (GB)**
Inventor: **Thursby, Anthony Peter, 2 Sefton Paddock, Stoke Poges Buckinghamshire (GB)**

(74) Representative: **Dolwin, John Davison, Central Patent Department Wembley Office The General Electric Company, p.l.c. Hirst Research Centre East Lane, Wembley Middlesex HA9 7PP (GB)**

(54) **Signal processing circuit for pal colour television signals.**

(57) A two delay line (2, 3) PAL t.v. signal decoder in which the input composite signal, A, and the one and two line delayed signals B and C, are combined (10, 11, 14) to provide signals (A + B-2B) and (C-A)-90°, both having zero vertical luminance, these signals then being added and substracted (15, 16) to produce two signals (H, I) respectively having only the $\underline{u}$ and only the $\underline{v}$ chrominance component, for separate demodulation. With this arrangement, both cross-colour on vertical luminance and «Hanover bars» are suppressed in the decoder output. The signal (A + C-2B) and a signal (A + C) are also individually rectified (22, 25) and then combined (26, 27, 28) to produce an output control signal (MC) to modify the decoding mode for vertical colour transitions but not for signals consisting only of vertical luminance in the chrominance band.

-1-

MM/2296

Signal processing circuit for PAL colour television signals.

This invention relates to signal processing circuits for PAL colour television signals.

According to a first aspect of the invention there is provided a circuit for processing a PAL colour television system composite signal, including:

delay means for providing a first composite signal which is the PAL system signal at the input of the processing circuit, signal A, simultaneously with the second and third composite signals, signals B and C respectively, which are the signals which were at said input at instants respectively one and two line periods before signal A;

first combining means for providing first and second chrominance signals which respectively combine signals A, B and C in the proportions $\pm(A+C-2B)$ and signals A and C in the proportions $\pm(A-C)$, and means for individually band-pass filtering the first and second chrominance signals over the PAL chrominance frequency band such that, in the case where signals A, B and C have the same luminance and chrominance information, the first and second filtered chrominance signals both have zero vertical luminance in the chrominance band;

0150963

-2-

phase shift means for phase shifting one of the two filtered chrominance signals by 90° at the chrominance subcarrier frequency; and

second combining means for combining the phase shifted filtered chrominance signal and the other filtered chrominance signal to provide at respective separate outputs thereof first and second separated chrominance signals each having, in the case where signals A, B and C have the same luminance and chrominance information, a different one only of the two PAL chrominance components and zero vertical luminance.

In the above-described circuit, demodulating means may be provided for applying first and second demodulating signals respectively to the first and second separated chrominance signals such that first and second chrominance component output signals are provided.

In the circuit as described in the previous paragraph, third combining means may be provided for combining one of the two filtered chrominance signals with one of the three composite signals to provide a luminance component output signal which is comb filtered only in the chrominance band. The third combining means may be provided for combining said first filtered chrominance signal with signal B to provide said luminance component output signal, in which case said phase shift means will be for phase shifting said second filtered chrominance signal by 90° at the chrominance subcarrier frequency.

In the circuit as described in the previous paragraph there may also be provided:

means for adding signals A and C to provide a further signal, said further signal having zero chrominance but non-zero vertical luminance in the case where signals A and C have the same luminance and chrominance information, and means for band pass filtering said further signal over the PAL chrominance frequency band to provide a filtered further signal; and

means for individually rectifying one of the two filtered chrominance signals and said filtered further signal to provide respectively first and second rectified signals, and means for combining said first and second rectified signals to provide an output signal for controlling the mode of decoding the input composite signal only in the case where signals A and C do not have the same luminance and chrominance information.

In the circuit as decribed in any of the previous four paragraphs, said first combining means may comprise means for providing a differenced signal from signals A and B, means for separately providing another differenced signal from signals C and B, and means for combining the two differenced signals to provide said first chrominance signal.

According to a second aspect of the invention there is provided a circuit for decoding a PAL colour television system composite signal, including:

delay means for providing a first composite signal which is the PAL system signal at the input of the decoding circuit, signal A, simultaneously with second and third composite signals, signals B and C respectively, which are the signals which were at said input at instants respectively one and two line periods before signal A;

first combining means for combining at least signals A and C to provide at least one chrominance signal, and means for band pass filtering said at least one chrominance signal over the PAL chrominance frequency band such that, in the case where at least signals A and C have the same luminance and chrominance information, at least one filtered chrominance signal having zero vertical luminance in the chrominance band is provided;

second combining means for combining a said filtered chrominance signal with one of the three composite signals to provide a luminance component output signal which is comb filtered only in the chrominance band;

demodulating means for applying demodulating signals to at least one signal which is, or is derived from, said at least one filtered chrominance signal such that first and second chrominance component output signals are provided;

means for adding signals A and C to provide a further signal, said further signal having zero chrominance but non-zero vertical luminance in the case where signals A and C have the same luminance and chrominance information,  and means for band pass filtering said further signal over the PAL chrominance frequency band to provide a filtered further signal; and

means for individually rectifying a said filtered chrominance signal and said filtered further signal to provide respectively first and second rectified signals, and means for combining said first and second rectified signals to provide an output signal for controlling the mode of decoding the input composite signal only in the case where signals A and C do not have the same luminance and chrominance information.

0150963

-5-

In the circuit just described according to the second aspect of the invention, said filtered chrominance signal which is rectified to provide said first rectified signal may be provided by band-pass filtering over the PAL chrominance frequency band a said chrominance signal provided by said first combining means by the combination of signals A,B and C in the proportions $\pm(A+C-2B)$.

The filtered chrominance signal described in the previous paragraph may be combined, by said second combining means described in the penultimate paragraph, with signal B to provide said luminance component output signal.

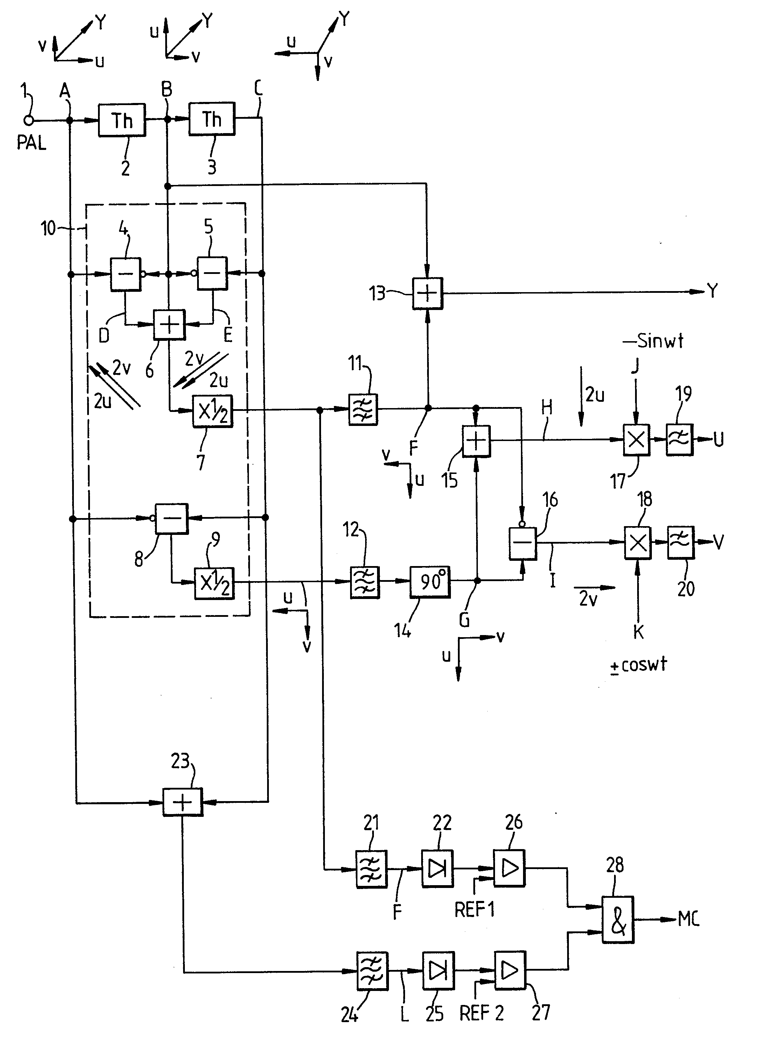

An example of a circuit embodying both the above-described first and second aspects of the invention will now be described with reference to the accompanying drawing.

Referring now to the drawing, delay means consist of two one-line delays 2 and 3 connected in series to an input terminal 1. This delay means provides a first composite signal which is the PAL system signal at the input of the decoding circuit, signal A, simultaneously with second and third composite signals, signals B and C respectively, which are the signals which were at said input at instants respectively one and two line periods before signal A. In the drawing, the relative phase of the PAL system chrominance component quadrature modulated subcarriers $\underline{u}$ and $\underline{v}$ is shown by the correspondingly referenced vectors for signals A, B and C; and the relative phase of the PAL system luminance component Y for signals A, B and C is also shown. In a 625-line PAL system the relationship between the frequency of the quadrature modulated chrominance subcarrier and the line frequency is such that one line period equals (284-1/4) chrominance periods, and furthermore the phase of the $\underline{v}$ component subcarrier is reversed after every line. Thus from signal C to signal B and from signal B to signal A, the phase of the $\underline{u}$ vector is advanced each time by $90^{o}$,

the phase of the $\underline{v}$ vector is delayed each time by 90°, and the phase of the Y vector remains the same. In the case where signals A, B and C have the same luminance and chrominance information, such that the three lines have the same transitions of chrominance and luminance in the horizontal direction, that is to say only vertical chrominance and vertical luminance details are presented from line to line, the amplitude of each of the $\underline{u}$, $\underline{v}$ and Y vectors is the same in signals A, B and C as shown in the drawing.

Signals A and B are applied to a subtractor 4 such that its output signal D is (A-B), and signals B and C are applied to a subtractor 5 such that its output signal E is (C-B). Vertical luminance is cancelled in the subtractors 4 and 5. The $\underline{u}$ and $\underline{v}$ chrominance components in signals D and E, having the amplitude and phase shown in the drawing, are applied to an adder 6 whose output is applied to a divide-by-two potential divider circuit 7. The output of the divide-by-two circuit 7 is a first chrominance signal corresponding to 1/2(A+C-2B).

Signals A and C are applied to a subtractor 8 which cancels vertical luminance, and the output of the subtractor 8 is applied to a divide-by-two circuit 9 whose output is a second chrominance signal corresponding to 1/2(C-A).

The elements 4, 5, 6, 7, 8 and 9 as described above can be considered as a first combining means 10 for providing the above-described first and second chrominance signals. Band-pass filters 11 and 12 individually band-pass filter the first and second chrominance signals over the PAL chrominance frequency band such that, in the case where signals A, B and C have the same luminance and chrominance information, their outputs are first and second filtered chrominance signals both having zero vertical luminance in the chrominance band.

The first filtered chrominance signal, the output of band-pass filter 11, is shown as signal F in the drawing. Signal F has chrominance only with its $\underline{u}$ and $\underline{v}$

0150963

-7-

components being of the same amplitude and in antiphase with the u and v components of the composite signal B.

Further combining means are provided by the adder 13 to the inputs of which are applied signals B and F and the output of which is a luminance component output signal Y which is the luminance component of signal B comb filtered only in the chrominance band.

The second filtered chrominance signal, the output of band-pass filter 12, is phase shifted by -90° at the chrominance subcarrier frequency by phase shift means 14 which may be implemented by, for example, a delay line. This phase shifted filtered chrominance signal is shown as signal G in the drawing. Signal G has chrominance only with its u and v components being of the same amplitude as the corresponding components of signal F, the u components of signals F and G being in phase and the v components of signals F and G being in antiphase.

Further combining means are provided by the adder 15 and the subtractor 16 to the two inputs of each of which are applied the signals F and G, to provide first and second separated chrominance signals shown in the drawing respectively as signals H and I. In the case where signals A, B and C have the same luminance and chrominance information, the signal H contains only the u PAL chrominance component having double the amplitude and being in antiphase with the u component of the composite signal B, and the signal I contains only the v PAL chrominance component having double the amplitude and being in phase with the v component of the composite signal B.

Demodulating means are provided by multipliers 17 and 18 for applying first and second demodulating signals, shown as signals J and K in the drawing, respectively to the signals H and I and by low-pass filters 19 and 20 to which the outputs of the multipliers 17 and 18 are respectively applied. The phase of the demodulating signal J -sinwt, is determined with respect to the phase of the modulated subcarrier u of signal H such that a first chrominance component output signal U is provided by

0150963

-8-

the output of filter 19. The phase of the demodulating signal K, $\pm$ cos$\omega$t, is determined with respect to the phase of the modulated subcarrier $\underline{v}$ of the signal I such that a second chrominance component output signal V is provided by the output of filter 20.

In the case where signals A, B and C have the same luminance and chrominance information, the signals H and I have zero vertical luminance and so, in this case, spurious colour information on vertical patterns, that is to say cross-colour due to vertical luminance in the chrominance band, is completely suppressed in the chrominance component output signals U and V. In this case also, the complete separation of the $\underline{u}$ and $\underline{v}$ chrominance components in the signals H and I which are individually applied to the multipliers 17 and 18 completely suppresses chrominance errors in the chrominance output signals U and V of the type which would otherwise give rise to the effect of fine horizontal stripes known as "Hanover Bars" on coloured areas of the picture.

The advantages of the decoder circuit as described above are derived in the case where the signals A, B and C have the same luminance and chrominance information. If this is not the case, that is to say if there are line-by-line changes in the chrominance information, which can otherwise be described as vertical colour transitions, then the circuit will not work exactly in the manner described above and spurious signals are provided in the Y, U and V component output signals which degrade the vertical resolution of the picture information. Regarding chrominance, this degradation of vertical information willl be subjectively apparent in the picture as spurious dark lines at the colour transitions. Regarding luminance, this degradation becomes apparent as a pattern of dots due to the presence of the chrominance subcarrier as a spurious signal.

It is therefore desirable to detect those cases where signals A, B and C do not have the same luminance and chrominance information, for which purpose it is enough to detect those cases when signals A and C do not have the same luminance and chrominance information, and to provide an output signal in those cases which can be used to modify the manner in which the input PAL composite signal is decoded, for example a band-stop filter may be used to remove unwanted chrominance from the decoded luminance signal, and separated chrominance component signals may be provided simply by applying the composite signal directly to the chrominance demodulators.

The circuit shown in the drawing provides for such a decoder switching output signal to be produced in the case where signals A and C do not have the same luminance and chrominance information, as will now be described.

The previously-described first chrominance signal corresponding to $1/2(A+C-2B)$ provided by the output of the divide-by-two circuit 7 is also band-pass filtered over the PAL chrominance frequency band by a band-pass filter 21 to provide the filtered chrominance signal F at the input of a rectifier 22.

An adder 23 has signals A and C applied to its inputs to provide a further signal, this further signal having zero chrominance but non-zero vertical luminance in the case where signals A and C have the same luminance and chrominance information, and this further signal is band-pass filtered over the PAL chrominance frequency band by a band-pass filter 24 to provide a filtered further signal L at the input of a rectifier 25.

The rectifiers 22 and 25 provide respectively first and second rectified signals, and first and second comparators 26 and 27 are provided for individually comparing the first and second rectified signals with respective first and second threshold signals REF1 and REF2.

The output signals of the comparators 26 and 27 are applied to the inputs of an AND gate 28 such that the AND gate 28 provides a decoder switching output signal MC only in the case where signals A and C do not have the same luminance and chrominance information.

The effect of the signals leading to the operation of the AND gate 28 may be explained in more detail as follows. In the case where signals A and C do not have the same luminance and chrominance information, then a chrominance signal is provided by the adder 23 and an output signal enabling the AND gate 28 is provided by the comparator 27. In this case, a chrominance signal F is also provided which will have different amplitude and phase $\underline{u}$ and $\underline{v}$ components from those previously described and shown in the drawing but will nevertheless result in an output signal being provided by the comparator 26 to enable the AND gate; and the switching output signal MC is therefore provided. In the case where signals A and C have the same luminance and chrominance information and there are chrominance components in those signals, then those chrominance components will cancel in the adder 23 and furthermore if the luminance information in signals A and C is outside the chrominance band of frequencies it will not pass the filter 24. Therefore, in this case the output of the comparator 27 will disable the AND gate 28 even though the chrominance components pass the filter 21. In the case where signals A and C have the same luminance and chrominance information and these signals consist only of luminance information within the chrominance band of frequencies, then this luminance information will pass the filter 24 and the comparator 27 will provide an output to enable the AND gate 28. However, in this case the absence of chrominance components will result in a lack of signal F ensuring that the output of the comparator 26 disables the AND gate 28. This vertical luminance information within the chrominance band therefore will be decoded by the circuit shown in the drawing to provide the appropriate luminance component Y output signal without any spurious cross colour U and V component output signals. If the elements 21,22 26 and 28 were not present then the output of the comparator 27

-11-

would result in a modified decoding of this vertical luminance information such that it could be filtered out and so lost from the picture by a band-stop filter covering the chrominance band of frequencies.

Some possible variations of the decoder circuit described so far, within the scope of the invention, are as follows:

The subtractor 4 provides a differenced signal D from signals A and B, the subtractor 5 separately provides a differenced signal E from signals C and B, and the adder 6 and divide-by-two circuit 7 then average these two differenced signals to provide the first chrominance output signal from the first combining means 10 corresponding to $1/2(A+C-2B)$. The same first chrominance output signal could be provided alternatively by first averaging signals A and C and then subtracting signal B from this averaged signal.

By reversing the polarities of the subtractors 4 and 5, or the subtractor mentioned in the previous paragraph, the signal F could alternatively be $-1/2(A+C-2B)$ at the output of filter 11. Signal G can alternatively be derived by reversing the polarity of the subtractor 8 to produce a signal $+1/2(A-C)$ and effecting a phase shift of $+90^{\circ}$ with the phase shift means 14. If the polarity of the subtractor 8 is as shown and the phase shift means 14 effects $+90^{\circ}$, or if the phase shift means effects $-90^{\circ}$ as shown with the polarity of the subtractor 8 reversed, a signal which is the antiphase signal of signal G is provided at the output of element 14.

The divide-by-two circuits 7 and 9 may be omitted, in which case the signal F may be applied to a divide-by-two circuit whose output will be applied to one input of the adder 13.

By appropriately arranging the polarity of the subtractor 16 to be as shown in the drawing or to be the inverse, the signal F or its antiphase signal may be combined with either the signal G or its antiphase signal to provide signal H or its antiphase signal together with signal I or its antiphase signal. If the antiphase signal of signal F is provided at the output of the filter 11 then substituting a subtractor for adder 13 will enable the luminance component output signal Y to be obtained from composite signal B.

The 90$^\circ$ phase shift means 14 can be provided in the circuit following the band-pass filter 11 instead of following the band-pass filter 12. In this case signals will be provided to the adder and subtracter elements 15, 16 which are delayed or advanced by 90$^\circ$ compared with the signals F and G previously described. The resultant signals provided to the multipliers 17 and 18 will then be delayed or advanced by 90$^\circ$ compared with the signals H and I shown in the drawing. In this case chrominance component output signals U and V can be provided by appropriate choice of the phase of the demodulating signals applied to the multipliers 17 and 18; and also the output signal from the band-pass filter 12 can be added to or subtracted from, as appropriate, the composite signal A or the composite signal C to derive a luminance component output signal Y.

The essence of the first aspect of the invention lies in the provision of the signals H and I having complete separation of the u and v chrominance components and zero vertical luminance. The circuit for processing a composite PAL signal to provide these signals is useful and advantageous in itself without necessarily providing further circuit elements in the particular manner described above to produce output component signals Y, U and V.

Regarding provision of the decoder switching output signal MC, according to the second aspect of the invention, in the case, and only in the case, where signals A and C do not have the same luminance and chrominance information, the signal input to the rectifier 22 need not be the signal F derived exactly as shown in the drawing. It is only essential for this purpose that the first combining means 10 combines at least signals A and C to provide at least one chrominance signal, and that this chrominance signal is band-pass filtered over the PAL chrominance frequency band such that, in the case where at least signals A and C have the same luminance and chrominance information, a filtered chrominance signal having zero vertical luminance in the chrominance band is provided to the input of the rectifier 22. Furthermore this means of providing a decoder switching output signal MC may be applicable to decoder circuits which have two one-line delays 2 and 3 to provide signals A, B and C but where these three signals are processed in ways other than those described above in relation to the drawing to provide component output signals Y, U and V.

An output signal which may be used to control the decoding mode may alternatively be derived by combining the outputs of rectifiers 22 and 25 using a multiplier.

## CLAIMS

1. A circuit for processing a PAL colour television system composite signal, including:

delay means (2,3) for providing a first composite signal which is the PAL system signal at the input (1) of the processing circuit, signal A, simultaneously with second and third composite signals, signals B and C respectively, which are the signals which were at said input at instants respectively one and two line periods before signal A;

first combining means (10) for providing first and second chrominance signals which respectively combine signals A, B and C in the proportions $\pm(A+C-2B)$ and signals A and C in the proportions $\pm(A-C)$, and means (11, 12) for individually band-pass filtering the first and second chrominance signals over the PAL chrominance frequency band such that, in the case where signals A, B and C have the same luminance and chrominance information, the first and second filtered chrominance signals both have zero vertical luminance in the chrominance band;

phase shift means (14) for phase shifting one of the two filtered chrominance signals by $90°$ at the chrominance subcarrier frequency; and

second combining means (15, 16) for combining the phase shifted filtered chrominance signal (G) and the other filtered chrominance signal (F) to provide at respective separate outputs thereof first and second separated chrominance signals (H, I) each having, in the case where signals A, B and C have the same luminance and chrominance information, a different one only of the two PAL chrominance components ($u$, $v$) and zero vertical luminance.

2. A circuit as claimed in claim 1, in which demodulating means (17-20) are provided for applying first and second demodulating signals (J, K) respectively to the first and second separated chrominance signals (H, I) such that first and second chrominance component output signals (U, V) are provided.

3.    A circuit as claimed in claim 2, in which third combining means (13) are provided for combining one of the two filtered chrominance signals (F) with one of the three composite signals (B) to provide a luminance component output signal (Y) which is comb filtered only in the chrominance band.

4.    A circuit as claimed in claim 3, in which the third combining means (13) is provided for combining said first filtered chrominance signal (F) with signal B to provide said luminance component output signal (Y), and in which said phase shift means (14) is for phase shifting said second filtered chrominance signal by 90° at the chrominance subcarrier frequency.

5.    A circuit as claimed in claim 3 or claim 4, in which there are also provided:

means (23) for adding signals A and C to provide a further signal, said further signal having zero chrominance but non-zero vertical luminance in the case where signals A and C have the same luminance and chrominance information, and means (24) for band pass filtering said further signal over the PAL chrominance frequency band to provide a filtered further signal (L); and

means (22, 25) for individually rectifying one of the two filtered chrominance signals (F) and said filtered further signal (L) to provide respectively first and second rectified signals, and means (26, 27, 28) for combining said first and second rectified signals to provide an output signal (MC) for controlling the mode of decoding the input composite signal only in the case where signals A and C do not have the same luminance and chrominance information.

6.    A circuit as claimed in any one of claims 1 to 5, in which said first combining means (10) comprises means (4) for providing a differenced signal from signals A and B, means (5) for separately providing another differenced signal from signals C and B, and means (6, 7) for combining the two differenced signals to provide said first chrominance signal.

-16-

7. A circuit for decoding a PAL colour television system composite signal, including:

delay means (2, 3) for providing a first composite signal which is the PAL system signal at the input of the decoding circuit, signal A, simultaneously with second and third composite signals, signals B and C respectively, which are the signals which were at said input at instants respectively one and two line periods before signal A;

first combining means (10) for combining at least signals A and C to provide at least one chrominance signal, and means (11, 21) for band pass filtering said at least one chrominance signal over the PAL chrominance frequency band such that, in the case where at least signals A and C have the same luminance and chrominance information, at least one filtered chrominance signal (F) having zero vertical luminance in the chrominance band is provided;

second combining means (13) for combining a said filtered chrominance signal (F) with one of the three composite signals (B) to provide a luminance component output signal (Y) which is comb filtered only in the chrominance band;

demodulating means (17-20) for applying demodulating signals (J, K) to at least one signal (H, I) which is, or is derived from, said at least one filtered chrominance signal such that first and second chrominance component output signals (U, V) are provided;

means (23) for adding signals A and C to provide a further signal, said further signal having zero chrominance but non-zero vertical luminance in the case where signals A and C have the same luminance and chrominance information, and means (24) for band pass filtering said further signal over the PAL chrominance frequency band to provide a filtered further signal (L); and

means (22, 25) for individually rectifying a said filtered chrominance signal (F) and said filtered further signal (L) to provide respectively first and second rectified signals, and means (26, 27, 28) for combining said first and second rectified signals to provide an output signal (MC) for controlling the mode of decoding the input composite signal only in the case where signals A and C do not have the same luminance and chrominance information.

8.    A circuit as claimed in claim 7, in which said filtered chrominance signal (F) which is rectified to provide said first rectified signal is provided by band-pass filtering over the PAL chrominance frequency band a said chrominance signal provided by said first combining means by the combination of signals A, B and C in the proportions $\pm(A+C-2B)$.

9.    A circuit as claimed in claim 8, in which said filtered chrominance signal (F) which is rectified to provide said first rectified signal is combined by said second combining means (13) with signal B to provide said luminance component output signal (Y).

0150963